# EUROPÄISCHE PATENTANMELDUNG

(11) **EP 1 090 732 A1**
(43) Veröffentlichungstag der Anmeldung: **11.04.2001**
(21) Anmeldenummer: 99810912.8
(22) Anmeldetag: 07.10.1999
(51) Int. Cl.: B29C 45/14, B29C 70/48, B29C 33/04

(54) **Vorrichtung und Verfahren zur Herstellung von Faserverbundteilen**

(71) Anmelder: Alusuisse Technology & Management AG, 8212 Neuhausen am Rheinfall (CH)
(72) Erfinder: Plata, Miroslaw, 1963 Vetroz (CH); Hintermann, Martin, 9315 Neukirch (CH)

(57) **Zusammenfassung**

Die Erfindung betrifft ein Formwerkzeug (15) aus einem oberen (11) und unteren Formwerkzeugteil (12) zur Herstellung eines Faserverbundteils (14) im RTM-Verfahren, wobei die Formwerkzeugteile (11, 12) derart zusammenwirken, dass zwischen den Formwerkzeugteilen (11, 12) ein Formwerkzeughohlraum zur Aufnahme einer Formmasse gebildet wird, und das Formwerkzeug (15) Mittel zu dessen Beheizung und Kühlung enthält. Die Formwerkzeugteile (11, 12) enthalten ein aussen liegendes Deckelement (2) aus einem Material hoher Festigkeit und eine innen liegende Formwerkzeugschale (3, 3a) aus einem Metall oder einer Metalllegierung hoher thermischer Leitfähigkeit. Die Formwerkzeugschale (3, 3a) enthält Kanäle (4, 4a) zur Zirkulation eines Kühl- und Heizmediums. Das Deckelement (2) weist an seiner der Formwerkzeugschale (3, 3a) zugewandten Seite eine Mehrzahl von Anformungen (5) als Distanzhalter zur Formwerkzeugschale (3, 3a) auf. Zwischen dem Deckelement (2) und der Formwerkzeugschale (3, 3a) sind durch die Anformungen (5) strukturierte Hohlräume (6) ausgebildet.

## Beschreibung

Vorrichtung zur Herstellung von Faserverbundteilen im RTM-Verfahren enthaltend ein Formwerkzeug aus einem oberen Formwerkzeugteil und einem unteren Formwerkzeugteil, wobei die Formwerkzeugteile derart zusammenwirken, dass zwischen dem oberen und unteren Formwerkzeugteil ein Formwerkzeughohlraum zur Aufnahme einer Formmasse gebildet wird, und das Formwerkzeug Mittel zu dessen Beheizung enthält. Weiterer Gegenstand der Erfindung ist ein Verfahren zur Herstellung von Faserverbundteilen.

Gegenstände, insbesondere Bauteile, aus faserverstärktem Kunststoff, nachfolgend Faserverbundteile genannt, mit Lang- und insbesondere Endlosfasern als Verstärkungsfasern und einer Kunststoffmatrix nehmen wegen ihres verhältnismässig geringen Gewichtes und ihrer hohen Festigkeit einen bedeutenden Stellenwert im Schienen- und Strassenfahrzeugbau, im Flugzeug-, Schiffs- und Bootsbau, im Leichtbau, z.B. zur Verstärkung von Baukonstruktionen oder in Sportgeräten ein.

Der Herstellung solcher Faserverbundteile liegt üblicherweise folgendes Prinzip zugrunde: Faserrohlinge, welches vorgeformte Fasergebilde, wie Gewebe, Gestricke, Matten, Vliese und dergl., sind, werden mit einer hochfliessfähigen, insbesondere thermisch aktivierten, Schmelze aus Kunststoff, nachfolgend auch Kunststoff-Matrix genannt, imprägniert und der mit der Kunststoff-Matrix durchtränkte Faserrohling, nachfolgend Formmasse genannt, wird einem Formgebungsprozess unterzogen und unter Hitze und/oder Druck ausgehärtet.

Als Kunststoff-Matrizes werden z.B. duroplastische Kunststoffe, wie z.B. Epoxidharze oder aushärtbare Polyestersysteme, oder thermoplastische Kunststoffe, wie Polyethylen, Polypropylen oder Polyamid, verwendet.

Faserverstärkte Kunststoffe gelangen zunehmend auch in Konstruktionen zum Einsatz, die sehr hohen Belastungen ausgesetzt sind. Dies erfordert die Entwicklung von Faserverbundteilen mit hohen Fasergehalten. Heute werden üblicherweise Faserverbundteile mit Fasergehalten von z.B. 25 bis 60 Vol.-% hergestellt. Besonders beanspruchte Bauteile bestehen aus Faserverbundteilen mit einem Fasergehalt von z.B. 45 bis 60 Vol.-%.

Neben der verfahrens-technischen Umsetzung solch hoher Fasergehalte, stellen auch die immer komplexeren Geometrien und Formen, wie Hohlformen, welche an einteiligen, nichtgefügten Faserverbundteilen zu verwirklichen sind, eine grosse Herausforderung an die Entwicklung neuer und die Verbesserung bekannter Verfahren. Die Faserverbundteile sollen zudem reproduzierbar und serienmässig sowie wirtschaftlich herstellbar sein und möglichst wenig Nachbearbeitungsschritte erfordern. In diesem Zusammenhang sind auch technische Massnahmen zur Reduktion der Taktzeiten in der Herstellung solcher Faserverbundteile notwendig.

Das sogenannte Harz-Fliessform-Verfahren, auch Resin-Transfer-Moulding-(RTM)-Verfahren genannt, nachfolgend RTM-Verfahren genannt, stellt ein wirtschaftliches Verfahren dar, mit welchem den obigen Anforderungen gerecht werdende Faserverbundteile serienmässig hergestellt werden können.

Im RTM-Verfahren wird in der Regel mit Kunststoffmatrizes aus Epoxidharzen oder aushärtbaren Polyester gearbeitet. Das RTM-Verfahren ist beispielsweise in Kötte, "Der Resin-Transfer-Molding-Prozess - Analyse eines Harzinjektionsverfahrens", Verlag TÜV Rheinland, 1991 ausführlich beschrieben.

Unter RTM-Verfahren oder RTM-Technik wird in diesem Text ein Verfahren verstanden, in welchem der Hohlraum eines mehrteiligen Formwerkzeuges mit einem Faserrohling oder Fasergebilde beschickt wird und in den Hohlraum des geschlossenen Formwerkzeuges eine duro- oder thermoplastische Kunststoffmatrix injiziert und zur Aushärtung bzw. Polymerisation gebracht wird.

In einer bekannten Anwendung des RTM-Verfahrens wird beispielsweise ein viskoses Epoxidharz bei ca. 40°C während ca. 2 Minuten (min.) in ein mit einem Faserrohling beschickten und geschlossenen Formwerkzeug injiziert. Während rund 14 - 20 min. wird der mit der Kunststoffmatrix durchtränkte Faserrohling bzw. die Formmasse bei ca. 100°C ausgehärtet. Die Aushärtung ist eine exotherme Polyadditions-Reaktion. Zur Auslösung dieser Reaktion muss die Kunststoffmatrix auf eine Reaktionstemperatur gebracht werden. Bei fortschreitender Reaktion muss gegebenenfalls überschüssige exotherme Reaktionswärme abgeführt werden, um zu verhindern, dass eine Überhitzung der Formmasse eintritt, durch welche die Qualität des Faserverbundteils beeinträchtigt werden kann.

Die DE 197 02 933 A1 beschreibt ein Formwerkzeug aus zwei Formwerkzeugteilen bzw. Formwerkzeughälften. Jede Formwerkzeughälfte enthält einen aussenseitig angeordneten Stützrahmen aus Aluminium mit sich gegenseitig kreuzenden Rippen und ein innenseitig, einem Formwerkzeughohlraum zugewandtes Trägermaterial, welches eine mit Kupfer durchsetzte Polymermatrix, z.B. Epoxidharz, mit integrierten Heizrohren enthält. Auf das Trägermaterial ist eine Schale aus Nickel oder einer Nickellegierung aufgebracht, welche die dem Formwerkzeughohlraum zugewandte Oberfläche ausbildet. Das Formwerkzeug ist zur Verarbeitung von kalt- oder warmaushärtenden duroplastischen Matrixmaterialien bestimmt. Die als Trägermaterial eingesetzten Materialien (Epoxidharze) begrenzen die Verfahrenstemperatur auf ca. 160°C.

Es sind auch RTM-Verfahren bekannt, bei welchen Matrixsysteme aus thermoplastischen Kunststoffen verarbeitet werden. Dabei wird auch von einem sogenannten Thermoplast-RTM gesprochen. Die DE 195 27 154 A1 beschreibt ein RTM-Verfahren, nach welchem Faserverbundteile mit einer Polyamid-12-Matrix hergestellt werden können. Die Vernetzung, d.h. die Polymerisation der Kunststoffmatrix, geschieht in diesem Verfahren bei rund 200-240°C, gegenüber der Verarbeitung von Duroplast-Matrizes also bei wesentlich höheren Temperaturen. Die Aufbereitung der Kunststoffmatrix, welche beispielsweise kurz vor dem Injizieren aus mehreren Komponenten gemischt werden kann, das Injizieren der Kunststoffmatrix in den Formwerkzeughohlraum und der Formgebungsprozess finden vorteilhaft unter Schutzgasatmosphäre, zweckmässig unter trockener Schutzgasatmosphäre statt, wobei insbesondere trockener Stickstoff verwendet wird.

Als Kunststoff-Matrix wird in diesem Text der Einfachheit halber sowohl die ausgehärtete Kunststoff-Matrix des Faserverbundteils als auch die in das Formwerkzeug injizierte oder zu injizierende fliessfähige Masse oder Schmelze aus Kunststoff bezeichnet. Bei einer in das Formwerkzeug zu injizierenden Polyamid-12-Matrix handelt es sich beispielsweise um eine Laktam-12-Schmelze.

Aufgabe vorliegender Erfindung ist eine Vorrichtung mit einem mehrteiligen Formwerkzeug zur Herstellung von Faserverbundteilen im RTM-Verfahren, wobei das Formwerkzeug eine optimale Temperaturführung während des Herstellungsprozesses ermöglichen und unter Einhaltung kurzer Taktzeiten eine optimale Verarbeitung von Thermoplast- und Duroplast-Matrizes erlauben soll.

Erfindungsgemäss wird die Aufgabe dadurch gelöst, dass die Formwerkzeugteile ein aussen liegendes Deckelement und eine innen liegende Formwerkzeugschale aus einem Metall oder einer Metalllegierung hoher thermischer Leitfähigkeit enthalten, wobei die Formwerkzeugschale Kanäle zur Zirkulation eines Heiz- und Kühlmediums enthält, und die Vorrichtung Mittel zur Einleitung eines Heiz- und Kühlmediums in die Kanäle enthält.

In bevorzugter Ausführung der Erfindung enthält die Formwerkzeugschale (2,3) Kanäle zur sequentiellen Zirkulation eines Heiz- und Kühlmediums und Mittel zur sequentiellen Einleitung eines Heiz- und Kühlmediums in die Kanäle. Sequentiell bedeutet in diesem Zusammenhang nacheinander folgend bzw. aufeinanderfolgend.

Die Beheizung- bzw. die Kühlung der Formmasse während der Herstellung des Faserverbundteils sind wesentliche Prozessfaktoren, mit welchen unter anderem die Taktgeschwindigkeiten oder die Werkstoffqualität beeinflusst werden können. Eine schnelle Beheizung und Abkühlung der Formwerkzeugschalen und somit der Formmasse mit kurzer Ansprechzeit der Formwerkzeugschalen sowie eine hohe Heiz- und Kühlleistung ermöglichen die Erhöhung der Taktgeschwindigkeit.

Die Formwerkzeugschale ist bevorzugt aus Kupfer oder einer Kupferlegierung, wie z.B. einer CuBe-(Kupfer-Beryllium)-Legierung, und besonders bevorzugt aus einer Bronze, insbesondere aus einer Zinnbronze. Die Bronze enthält bevorzugt mindestens 60% Kupfer und beispielsweise einen oder mehrere Hauptlegierungszusätze. Die Zinnbronze enthält bevorzugt wenigstens 80% Kupfer und den Hauptlegierungszusatz Zinn sowie beispielsweise weitere Legierungszusätze wie Zink, Blei und/oder Phosphor. Möglich sind auch Sonderbronzen, in welchen der Hauptlegierungszusatz Zinn weitgehend durch andere Metalle ersetzt ist, wie z.B. Aluminium-, Beryllium-, Blei-, Mangan-, Nickel-, Siliziumbronzen etc. oder Mehrstoffbronzen, wie z.B. Zinnblei-, Phosphorzinn, Mangansiliciumbronzen etc. Bevorzugt sind überdies Gussbronzen.

Des weiteren kann die Formwerkzeugschale auch aus Aluminium oder einer Aluminiumlegierung und insbesondere aus einer Aluminiumgusslegierung bestehen.

Die Formwerkzeugschalen sind zweckmässig in einem Giessverfahren hergestellte Gussstücke und bestehen aus einer Gusslegierung, beispielsweise einer Gusslegierung aus einem der oben genannten Metalle. Durch das Giessen der Formwerkzeugschalen können in einfacher und wirtschaftlicher Weise Formwerkzeughohlräume mit komplexen Geometrien, gegebenenfalls mit Hinterschneidungen, realisiert werden. Weiters können auch Anformungen, z.B. Rippen, an der Aussenseite der Formwerkzeugschale mit einfachem Aufwand hergestellt werden.

In Ausgestaltung der Erfindung ist vorgesehen, dass das Deckelement der Wärmeisolierung des Formwerkzeuges und/oder der Versteifung des Formwerkzeugteils dient. Das Deckelement enthält oder besteht beispielsweise aus einem Eisenmetall wie Stahl oder einer Stahllegierung oder aus Beton oder einer Kombination der genannten Materialien.

In weiterer Ausgestaltung der Erfindung enthält oder besteht das Deckelement aus einem Wärmedämmmaterial. Als Wärmedämmmaterialien werden z.B. poröse bzw. schaumartige Materialien mit niedriger Wärmeleitfähigkeit eingesetzt. Wärmedämmmaterialien können beispielsweise Gasbeton oder Kunststoffe, insbesondere poröse oder geschäumte Kunststoffe sein. Des weiteren können auch Wärmedämmmaterialien aus Mineralfasern, wie natürlich vorkommende anorganische Fasersubstanzen, z.B. Asbest oder dergl., oder auf mineralischer Basis hergestellte anorganische Fasern, wie z.B. Gesteinsfasern oder Glasfasern, verwendet werden.

Das Deckelement kann des weiteren aus Polymerbeton, auch Kunstharzbeton genannt, bestehen oder diesen enthalten. Polymerbeton ist ein Werkstoff aus Beton, in welchem das hydraulische Bindemittel ganz oder teilweise durch Betonzusatzstoffe auf der Basis von Kunstharzen, insbesondere Reaktionsharzen ersetzt ist. Des weiteren kann das Deckelement aus mit Epoxidharz gebundenem Quarzsand bestehen oder enthalten.

Die Formwerkzeugschale ist das dem Formwerkzeughohlraum zugewandte Teil eines Formwerkzeugteils. Sie weist eine innere, den Formwerkzeughohlraum begrenzende, und eine äussere, dem Deckelement anliegende, Seite bzw. Oberfläche auf. Die Formwerkzeugschale kann selbsttragend ausgebildet sein oder durch das Deckelement gestützt und in Form gehalten werden.

Das Deckelement ist das die Aussenseite des Formwerkzeugteils umfassende Teil. Es enthält eine äussere, die Aussenseite des Formwerkzeuges bildende und eine innere, der Formwerkzeugschale zugewandte Seite bzw. Oberfläche. Das Deckelement kann von hoher mechanischer Festigkeit sein und dem Formwerkzeug die nötige Stabilität und Steifigkeit sowie der Formwerkzeugschale die notwendige Formbeständigkeit geben, wobei Formbeständigkeit insbesondere die Beständigkeit gegenüber von aussen einwirkenden Zug-, Druck- und Scherspannungen oder Torsionskräften bedeutet.

Ist die Formwerkzeugschale als selbsttragendes Bauteil hoher Formbeständigkeit ausgebildet, so kann das Deckelement seinerseits von geringer Steifigkeit sein und beispielsweise von der Formwerkzeugschale gestützt sein. Das Deckelement kann in dieser Ausführung beispielsweise im wesentlichen aus einem Wärmedämmmaterial bestehen.

Das Deckelement ist zweckmässig mittels geeigneter Befestigungsmittel, wie Schrauben Nieten oder mittels Kleben, Klemmen, Schweissen und dergl., mit der Formwerkzeugschale, insbesondere randseitig, verbunden. Es können auch Befestigungspunkte innerhalb der Formwerkzeugfläche vorgesehen sein.

Das Formwerkzeug kann eine Breitenausdehnung von z.B. wenigstens 1 m, vorzugsweise von wenigstens 0,3 m und insbesondere von wenigstens 0,5 m und von maximal 10 m, insbesondere von maximal 5 m und eine Längenausdehnung von wenigstens 1 m, vorzugsweise von wenigstens 0,3 m und insbesondere von wenigsten 0,5 m und von maximal 10 m, insbesondere von maximal 6 m aufweisen.

Die Formwerkzeugschale kann beispielsweise eine Wanddicke von 5 bis 150 mm, insbesondere von 5 bis 100 mm aufweisen.

Die der Formwerkzeugschale anliegende Seite des Deckelements kann in weiterer Ausführung der Erfindung Anformungen als Distanzhalter wie Leisten, Rippen, welche z.B. parallel zueinander verlaufen und äquidistant angeordnet sein können, enthalten. Weiters können die Anformungen in eine oder mehrere Richtungen verlaufende und/oder sich kreuzende Längs- und Querrippen sein. Die Anformungen können auch quader- oder zylinderförmig oder dergl. sein. Die Endflächen der Anformungen liegen zweckmässig an die dem Deckelement zugewandten Seite der Formwerkzeugschale an. In bevorzugter Ausführung liegen die Anformungen jeweils zwischen zwei Kanälen, auf der Formwerkzeugschale auf. Zwischen den Kontaktflächen der Anformungen bzw. der Rippen und der Formwerkzeugschale kann ein Wärmedämmmaterial angeordnet sein.

In geänderter Ausführung kann anstelle des Deckelements die Formwerkzeugschale Anformungen der vorgenannten Art, insbesondere Rippen, als Distanzhalter zum Deckteil aufweisen. Die Anformungen sind vorteilhaft jeweils zwischen zwei Kanälen angeordnet.

Die Anformungen bzw. Rippen weisen beispielsweise eine Höhe von einem bis mehreren Zentimeter auf.

Zwischen dem Deckelement und der Formwerkzeugschale werden durch die Anformung bzw. Rippen ein oder mehrere, z.B. ein Gas, insbesondere Luft, enthaltende Hohlräume ausgebildet. Des weiteren kann der oder die durch die Anformungen bzw. Rippen gebildeten Hohlräume mit einem Wärmedämmmaterial der vorgenannten Beschaffenheit ausgefüllt sein.

Dank der Hohlräume ist der thermische Kontakt zwischen Deckelement und Formwerkzeugi schale gering gehalten, d.h. der Wärmefluss zwischen diesen beiden Teilen ist sehr klein.

Des weiteren kann an der dem Deckelement zugewandten Seite der Werkzeugschale voll-oder teilflächig eine Wärmedämmschicht angeordnet sein, welche z.B. als Zwischenschicht zwischen der Werkzeugschale und dem Deckelement oder als Teil des Deckelementes ausgebildet ist.

Die Formwerkzeugschale enthält in einer vorteilhaften Ausführungsform eine Mehrzahl von z.B. parallel verlaufenden Kanälen zur sequentiellen Zirkulation eines Heiz- und/oder Kühlmediums. Die Kanäle sind z.B. als Bohrungen ausgeführt oder können aus in die Formwerkzeugschale eingeführten Rohren aus einem der vorgenannten thermisch gut leitenden Metallen oder Metalllegierungen sein.

In anderer zweckmässiger Ausgestaltung der Erfindung ist vorgesehen, dass in die dem Deckelement zugewandten Seite der Formwerkzeugschale Nuten, insbesondere kanalartig ausgebildete Längsnuten, angebracht sind, z.B. durch Fräsen. Die die Nuten enthaltende Seite der Formwerkzeugschale und mit ihr die Nuten sind vorteilhaft mit einer Zwischenplatte, z.B. aus Metall, wie Stahl, Kupfer, Aluminium oder deren Legierungen abgedeckt, so dass die Nuten geschlossene Kanäle zur Zirkulation eines Heiz- und/oder Kühlmediums ausbilden. Die Zwischenplatte kann auch ein Wärmedämmmaterial, z.B. der vorstehend beschriebenen Art, beinhalten oder daraus bestehen.

Die Zwischenplatte ist z.B. mittels geeigneter Befestigungsmittel, wie Schrauben, Nieten, Kleben, Klemmen, Schweissen und dergl., an die Formwerkzeugschale befestigt. Der Zwischenplatte liegen beispielsweise die Endflächen der Anformungen des Deckelements oder eine Wärmedämmschicht als Zwischenschicht oder als Teil des Deckelementes auf.

Das Deckelement ist mittels geeigneter Befestigungsmittel, wie Schrauben Nieten, Kleben, Klemmen, Schweissen und dergl., mit der Formwerkzeugschale bzw. der Zwischenplatte, zweckmässig randseitig, verbunden.

Die Zwischenplatte kann auch als zusätzliches Element mittels geeigneter Befestigungsmittel, wie Schrauben, Nieten, Kleben, Klemmen, Schweissen und dergl. an das Deckelement angebracht sein, wobei die Zwischenplatte z.B. den Endflächen der Anformungen bzw. Rippen anliegt. Die Zwischenplatte kann auch als Teil des Deckelementes ausgebildet sein.

Des weiteren können in der vorgenannten Ausführungsvariante mit Zwischenplatte die Anformungen bzw. Rippen auch an der Zwischenplatte, insbesondere an der dem Deckelement zugewandten Seite der Zwischenplatte angebracht sein.

Das Deckelement, z.B. mit Zwischenplatte, kann über entsprechende Befestigungsmittel, beispielsweise der zuvor genannten Art an die Formwerkzeugschale, insbesondere randseitig, befestigt sein.

Zur Zirkulation eines Heiz und Kühlmediums können beispielsweise getrennte Kanäle bzw. ein getrenntes Kanalsystem vorgesehen sein. Vorzugsweise werden zur sequentiellen Zirkulation der Heiz- und Kühlmedien dieselben Kanäle bzw. dasselbe Kanalsystem verwendet. Die Kanäle können gegenseitig zu einem oder zwei, in letzteren Fall unabhängigen, Kanalsystemen verbunden sein und ein oder mehrere Eintritts- bzw. Austrittsöffnungen zum Einleiten bzw. Abführen des Heiz- bzw. Kühlmediums enthalten.

Die Kanäle können beispielsweise eine kreis-, ellipsenförmige oder polygonale Querschnittsform mit geraden oder gebogenen Seitenwänden aufweisen.

Die Kanäle weisen bevorzugt einen quadratischen, rechtecks-, oder kreisförmigen Querschnitt auf. Die Querschnittsfläche der Kanäle beträgt bevorzugt zwischen 300 und 500 mm² und vorteilhaft 400 mm². Ein kreisförmiger Querschnitt des Kanals weist beispielsweise einen Radius zwischen 9 und 13 mm, bevorzugt zwischen 9,5 und 12,5 mm, insbesondere von 11 mm auf. Ein quadratischer Querschnitt des Kanals weist z.B. eine Seitenlänge von 17 bis 23 mm, bevorzugt von 20 mm auf.

Die Kanalwände können überdies, zur Erhöhung der Wärmeübergangsfläche, d.h. der Kanalwandfläche, Wandanformungen, insbesondere in Kanallängsrichtung verlaufenden Rippen oder Leisten aufweisen.

Die dem Formwerkzeughohlraum zugewandte Seite der Formwerkzeugschale weist zweckmässig eine polierte Oberfläche auf, welche den Anforderungen an die Herstellung von Faserverbundteilen mit hochwertigen Oberflächen, auch Class-A-Oberflächen genannt, gerecht wird. Die dem Formwerkzeughohlraum zugewandte Oberfläche der Formwerkzeugschale kann fallweise mit einem geeigneten Material, wie z.B. Chrom, beschichtet sein.

Das Formwerkzeug enthält vorzugsweise Mittel zur Evakuierung der Hohlform sowie beispielsweise Mittel zur Prozessüberwachung, wie Sensoren zur Temperatur- oder Drucküberwachung oder dergl.

Als Heiz- und Kühlmedium wird zweckmässig ein fliessfähiges, insbesondere ein niedrig viskoses Medium, z.B. eine Flüssigkeit oder ein Gas, verwendet.

Zur Kühlung der Formwerkzeugschalen wird bevorzugt ein Kühlmedium mit hoher Wärmekapazität, insbesondere eine Flüssigkeit mit hoher Wärmekapazität, verwendet. Als bevorzugtes Kühlmedium wird Wasser oder eine wasserhaltige Flüssigkeit verwendet. Weiters kann auch Glykol oder eine glykolhaltige Flüssigkeit verwendet werden.

Zum Beheizen der Formwerkzeugschalen wird bevorzugt ein Gas, vorteilhaft ein Schutz- oder Inertgas, nachfolgend Inertgas genannt, verwendet. Besonders bevorzugt wird N₂ (Stickstoff), insbesondere trockener Stickstoff, Ar (Argon) oder CO₂ (Kohlendioxid) verwendet.

Wird das Faserverbundteil in einer Schutzgasatmosphäre hergestellt, so wird vorteilhaft dasselbe Gas, wie jenes, das zur Erzeugung einer Schutzgasatmosphäre während des Formprozesses eingesetzt wird, zum Beheizen der Formwerkzeugschalen bzw. der Formmasse angewendet. Dies ist bevorzugt trockener Stickstoff.

Das erfindungsgemässe Formwerkzeug kann zur Herstellung von Faserverbundteilen mit einer kalt- oder warmaushärtbaren Duroplast- und bevorzugt mit einer Thermoplast-Matrix, ) insbesondere mit einer Polyamid-12-Matrix, eingesetzt werden.

Weiterer Gegenstand der Erfindung ist ein Verfahren zur Herstellung eines Faserverbundteils mit einer Thermoplast-Matrix unter Verwendung einer erfindungsgemässen Vorrichtung nach einem Verfahren der RTM-Technik, welches sich dadurch auszeichnet, dass zu Beginn, während oder spätestens bei Beenden des Schliessens des Formwerkzeuges ein Medium zur Beheizung der Formwerkzeugschalen in Kanäle der Formwerkzeugschalen eingeleitet und zur Zirkulation gebracht wird und die Formw erkzeugschalen beheizt werden und die Thermoplast-Matrix bei Erreichen des Injiziertemperaturbereichs der Formwerkzeugschalen in das Formwerkzeug injiziert wird, und nach Abschluss des Injiziervorganges die Formwerkzeugschalen weiter auf die Polymerisationstemperatur beheizt werden und die Kunststoff-Matrix auspolymerisiert und die Formmasse zu einem Faserverbundteil verfestigt und vor oder nach Abschluss der Polymerisation ein Medium zum Kühlen der Formwerkzeugschalen in Kanäle in Zirkulation gebracht wird und die Formwerkzeugschalen auf eine Entformungstemperatur gekühlt werden.

Nachfolgend wird die Erfindung beispielhaft und mit Bezug auf die beiliegenden Zeichnungen näher erläutert. Es zeigen:
- Fig. 1:: einen schematischen Querschnitt ein Formwerkzeug einer ersten Ausführungsart;
- Fig. 2:: einen schematischen Querschnitt durch ein Formwerkzeug einer zweiten Ausführungsart;
- Fig. 3:: eine schematisch Darstellung des Ablaufes eines RTM-Verfahrens zur Herstellung von Faserverbundteilen mit Thermoplast-Matrix.

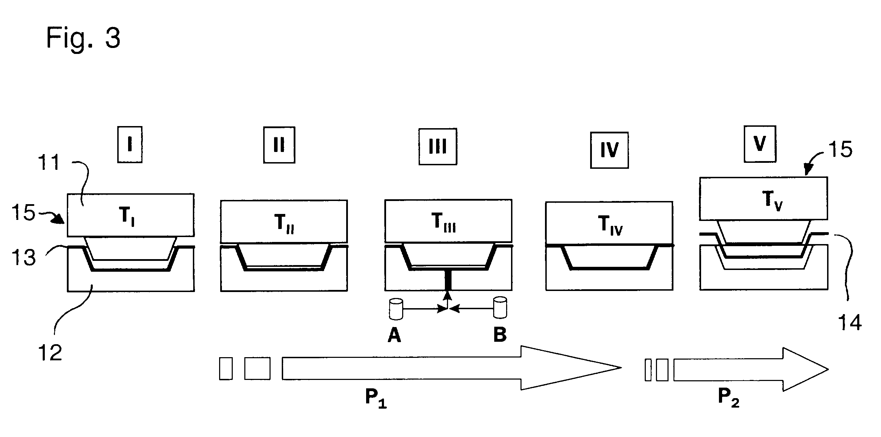

Das Formwerkzeug 15 ist vorteilhaft ein zweiteiliges Formwerkzeug mit einem oberen 11 und unteren Formwerkzeugteil 12 (Fig. 3).

Das Herstellungsverfahren eines Faserverbundteils nach RTM-Technik enthält folgende Verfahrensschritte in vorgegebener Abfolge (siehe Fig. 3):
I Beschicken des Formwerkzeuges 15 mit dem Faserrohling 13;
II Schliessen des Formwerkzeuges 15 und Heizen (P₁) der Formwerkzeugschalen auf eine Injiziertemperatur;
III Imprägnieren des Faserrohlings 13 mit der Thermoplast-Matrix, wobei die Thermoplast-Matrix durch Mischen der Komponenten A und B polymerisationsfähig gemacht und in das Formwerkzeug injiziert wird, und weiteres Heizen (P₁) der Formwerkzeugschalen auf Polymerisations- /Reaktionstemperatur;
IV Polymerisation/Aushärten und Abschluss des Heizens (P₁) und Einleitung der Kühlung (P₂);
V Abschluss der Kühlung (P₂) und Entformen des Faserverbundteils 14 sowie ev. Reinigung des Formwerkzeuges 15.

Die Beschickungs- und Entformungstemperatur der Formwerkzeugschalen beträgt zweckmässig weniger als 160°C, vorzugsweise zwischen 40 und 160°C, vorteilhaft zwischen 90 und 150°C und insbesondere zwischen 130 und 150°C.

Zur Beheizung P₂ der Formwerkzeugschalen nach erfolgter Beschickung des Formwerkzeuges 15 mit dem Faserrohling 13 wird ein Heizmedium, zweckmässig ein erwärmtes bzw. erhitztes Inertgas, insbesondere trockenes N₂, in den Kanälen der Formwerkzeugschalen in Zirkulation gebracht. Das Gas hat vorteilhaft eine mittlere Temperatur von 500 bis 1500°C, bevorzugt von 800 bis 1200°C, insbesondere von rund 1000°C.

Das Beschicken des Formwerkzeuges 15 dauert zweckmässig 15 bis 30 sec. (Sekunden), insbesondere 20 sec. Das Schliessen des Formwerkzeuges 15 dauert zweckmässig 15 bis 30 sec., insbesondere 20 sec.

Nach dem Schliessen des Formwerkzeuges 15 wird während einer Zeitdauer von z.B. 120 bis 160 sec, insbesondere von 140 sec. der Faserrohlings mit der Kunststoffmatrix, bevorzugt mit einer Thermoplast-Matrix, und insbesondere mit einer aktivierten Laktam-12-Schmelze, imprägniert bzw. wird eine solche Kunststoffmatrix in das Formwerkzeug 15 injiziert.

Der Injiziervorgang beginnt vorzugsweise bei Erreichen einer minimalen Injiziertemperatur der Formwerkzeugschalen von zweckmässig 150 bis 170°C, insbesondere von 160°C. Der Injiziervorgang ist bei Erreichen einer maximalen Injiziertemperatur der Formwerkzeugschalen von zweckmässig 170 bis 190°C, insbesondere von 180°C, abgeschlossen.

Nach Beenden des Injiziervorganges werden die Formwerkzeugschalen weiter kontinuierlich auf die Polymerisationstemperatur von zweckmässig 190 bis 260°C, insbesondere von 200 bis 230°C, erwärmt. Die Polymerisation bzw. das Aushärten der Kunststoff-Matrix dauert zweckmässig zwischen 340 und 380 sec., insbesondere 360 sec. Die Temperatur der Formwerkzeugschalen wird bis zum Abschluss der Polymerisation zweckmässig auf einem Temperaturwert zwischen 190 bis 240°C, insbesondere von 200 bis 230°C gehalten.

Die Heizrate beträgt zweckmässig zwischen 0,15 und 0,35°C/sec., vorteilhaft zwischen 0,20 und 0,30°C/sec. und insbesondere 0,25°C/sec.

In der Endphase des Polymerisationsvorganges bzw. der Aushärtung, zweckmässig 60 sec. und vorzugsweise 30 sec. vor Abschluss der Polymerisation, bzw. spätestens vor Beginn der Entformung wird die Kühlung P₂ der Formwerkzeugschalen eingeleitet. Dazu wird in die Kanäle ein Kühlmedium, vorzugsweise eine Kühlflüssigkeit gespiesen, die das Heizmedium bzw. Inertgas aus dem System verdrängt. Als bevorzugte Kühlflüssigkeit wird Wasser in Zirkulation gebracht. Die mittlere Temperatur des Kühlwassers beträgt zweckmässig zwischen 0 bis 50°C, vorzugsweise 10 bis 35°C, und insbesondere 15 bis 30°C. Die Formwerkzeugschalen werden zweckmässig innerhalb von 40 bis 100 sec., vorzugsweise von 50 bis 70 sec. und insbesondere innerhalb von 60 sec. von einer Temperatur von zweckmässig 180 bis 260°C, vorteilhaft von 200 bis 230°C auf eine Temperatur von zweckmässig weniger als 160°C, bevorzugt zwischen 130 bis 150°C, insbesondere von 140°C, abgekühlt.

Die Abkühlungsrate beträgt zweckmässig zwischen 0,5 und 2,5°C/sec., vorteilhaft zwischen 0,7 und 1,8°C/sec. und insbesondere zwischen 1,2 und 1,3°C/sec.

Der Beginn des aktiven Kühlvorganges kann vor Abschluss der Polymerisation erfolgen, wobei die Formwerkzeugtemperatur vor Ende der Polymerisation zweckmässig nicht unter die minimale Polymerisationstemperatur von 180 bis 200°C, insbesondere von 190°C fällt.

Bei Erreichen einer Temperatur von zweckmässig weniger als 160°C, vorzugsweise zwischen 40 und 160°C, vorteilhaft zwischen 90 und 150°C und insbesondere zwischen 130 und 150°C., beginnt die Entformung. Die Entformung wird zweckmässig innerhalb von 50 bis 70 sec., insbesondere innerhalb von 60 sec. durchgeführt. Fallweise wird das Formwerkzeug 15 noch zusätzlich gereinigt.

In geänderter Ausführung der Erfindung kann nach dem Beschicken des Formwerkzeuges mit dem Faserrohling der Formwerkzeughohlraum des Formwerkzeuges mit einem Gas, vorzugsweise mit einem Inertgas, wie Stickstoff, insbesondere mit trockenem Stickstoff, gespült werden, so dass im Formwerkzeughohlraum und im Faserrohling vorhandenes Wasser oder Wasserdampf entfernt bzw. verdampft und abgeführt wird. Gleichzeitig kann die Spülung auch zum Beheizen des Formwerkzeughohlraumes, d.h. des Faserrohlings, benutzt werden. Das in das Formwerkzeug eingebrachte Gas weist vorzugsweise eine Temperatur von 150 - 500°C, insbesondere von 200 bis 300°C auf.

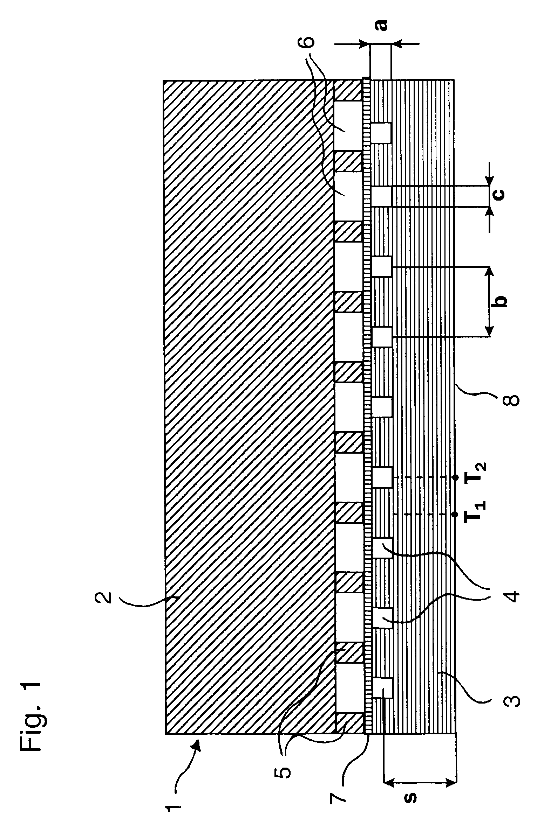

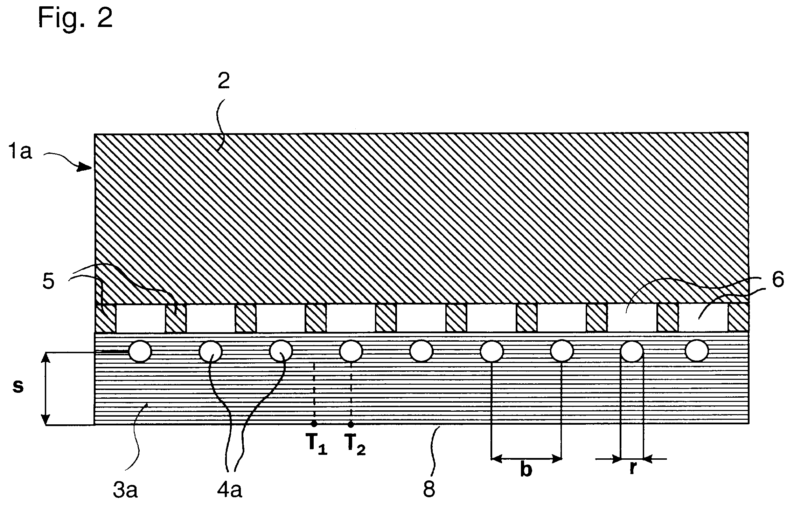

Die in Fig. 1 und Fig. 2 gezeigten Querschnitte von Formwerkzeugteilen 1, 1a enthalten ein mit parallel verlaufenden Rippen 5 ausgestattetes Deckelement 2 und eine Formwerkzeugschale 3, 3a mit Heiz- und/oder Kühlkanälen 4, 4a. Die Formwerkzeugteile 1, 1a können sowohl obere 11 als auch untere Formwerkzeugteile 12 sein.

In Fig. 1 sind die Kanäle 4 in die dem Deckelement 2 anliegende Seite der Formwerkzeugschale 3 eingefräste Nuten. Die Kanalquerschnitte sind quadratisch ausgebildet mit einer Seitenlänge von z.B. 20 mm. Die dem Deckelement 2 anliegende Seite und somit die Kanäle 4 sind von einer Zwischenplatte 7 aus Stahl überdeckt. Die Endflächen der Rippen 5 liegen auf der Zwischenplatte 7 auf. Die Formwerkzeugschale 3, die Zwischenplatte 7 und das Deckelement 2 sind im Randbereich des Formwerkzeugteils 1 miteinander verbunden (nicht gezeigt).

In Fig. 2 sind die Kanäle 4a als in die Formwerkzeugschale 3a eingelassene Bohrungen ausgebildet mit einem Radius von z.B. 11 mm. Die Rippen 5 liegen mit ihren Endflächen auf der dem Deckelement zugewandten Seite der Formwerkzeugschale 3a auf. Die Formwerkzeugschale 3a und das Deckelement 2 sind im Randbereich des Formwerkzeugteils 1a miteinander verbunden (nicht gezeigt).

Damit die dem Formwerkzeughohlraum zugewandte Seite bzw. Oberfläche 8 der Formwerkzeugschalen 3, 3a eine möglichst gleichmässige Temperaturverteilung vor, während und nach dem Beheizen oder Kühlen aufweist, ist die Anordnung der Abstände b zwischen den Kanälen abhängig von der Distanz s zwischen den Kanälen und der dem Formwerkzeughohlraum zugewandten Oberfläche 8 der Formwerkzeugschalen 3, 3a. Je kleiner der Abstand b und je grösser die Distanz s, desto homogener ist die Temperaturverteilung an der dem Formwerkzeughohlraum zugewandten Oberfläche 8 der Formwerkzeugschalen 3, 3a bei jeweils vergleichbarer Heiz- oder Kühlleistung. Aus wirtschaftlichen Gründen können jedoch die Kanalabstände b nicht zu klein und die Distanz s zu der dem Formwerkzeughohlraum zugewandten Oberfläche 8 der Formwerkzeugschalen bzw. die Dicke der Formwerkzeugschalen 3, 3a nicht zu gross gewählt werden. Des weiteren bewirkt eine zu grosse Distanz s eine zu lange Ansprechzeit der Oberfläche 8 auf Heiz- und Kühlimpulse.

Zur Beurteilung der Temperaturverteilung auf der dem Formwerkzeughohlraum zugewandten Oberfläche 8 der Formwerkzeugschalen 3, 3a werden die Temperaturmesspunkte T₁ und T₂ festgelegt, wobei T2 ein Temperaturmesspunkt an der dem Formwerkzeughohlraum zugewandten Oberfläche 8 der Formwerkzeugschale 3, 3a unterhalb eines Kanals 4, 4a und T₁ ein an der dem Formwerkzeughohlraum zugewandten Oberfläche 8 der Formwerkzeugschale 3, 3a in der Mitte zwischen zwei Kanälen 4, 4a ist, und AT die Differenz von T₂ - T₁ ist.

Die Grösse der Kanäle und die Distanzen b und s sind zweckmässig derart gewählt, dass die Temperaturdifferenz ΔT während dem Herstellungsprozess zweckmässig kleiner als 10°C (Grad Celsius), bevorzugt kleiner als 7°C ist. Des weiteren sind die vorgenannten Geometrien derart zu wählen, dass mit realisierbaren Wärmeübergangszahlen H für das Kühl- bzw. Heizmedium und die Kanalwand die benötigte Heiz- bzw. Kühlleistung Ph, Pc erbracht werden kann. Die kritische Grösse ist insbesondere die Kühlleistung Pc, da das Faserverbundteil innerhalb von zweckmässig 60 sec. um wenigstens 80°C abgekühlt wird.

In nachfolgender Tabelle 1 sind Beispiele von verschiedenen Dimensionierungen der Kanalabstände s, b in Formwerkzeugschalen 3 dargestellt, mit welchen die erforderliche Kühlleistung Pc mit der angegebenen, realisierbaren Wärmedurchgangszahl H erreicht wird.

Die Kühlleistung Pc erreicht zwar für verschiedene Dimensionierungen unterschiedliche Werte, sie liegt jedoch innerhalb des erforderlichen Leistungsbereichs. Die Formwerkzeugschale 3 besteht aus Kupfer und der Kanaldurchmesser a beträgt 20 mm (Fig. 1). Das Kühlmedium ist Wasser mit einer mittleren Temperatur von 25°C.

Die in Tabelle 1 aufgeführten Werte sind kurz vor Ende der Kühlphase ermittelt. Die Temperaturdifferenz ΔT ist immer kleiner als 6°C.

**Tabelle 1**

| | | | | | | | |
|---|---|---|---|---|---|---|---|
| | | | | | | | |

| s | b | T₁ | T₂ | △T | H | Pc | q |
|---|---|---|---|---|---|---|---|
| [mm] | [mm] | [°C] | [°C] | [°C] | [kW/m²K] | [kW] | [kW/m²] |
| | | | | | | | |
| 20 | 80 | 140,5 | 145,9 | 5,4 | 3'485 | 458 | 366 |
| 30 | 90 | 140,0 | 145,3 | 5,3 | 6'642 | 701 | 631 |

H ist die Wärmeübergangszahl zwischen der festen Kanalwand und dem bewegten Heizoder Kühlmedium. Pc ist die Kühlleistung und q steht für den Wärmefluss an der dem Formwerkzeughohlraum zugewandten Oberfläche 8 der Formwerkzeugschale 3. kW steht für Kilowatt und K für Kelvin.

In nachfolgender Tabelle 2 sind Beispiele von verschiedenen Dimensionierungen der Kanalabstände s und b in Formwerkzeugschalen 3 dargestellt, mit welchen die erforderliche Heizleistung Ph mit der jeweils angegebenen, realisierbaren Wärmedurchgangszahl H erreicht wird. Die Heizleistung Ph erreicht zwar für verschiedene Dimensionierungen unterschiedliche Werte, liegt jedoch innerhalb des erforderlichen Leistungsbereiches. Die Formwerkzeugschale 3 besteht aus Kupfer und der Kanaldurchmesser a beträgt 20 mm (Fig. 1). Das Heizmedium ist Stickstoff mit einer mittleren Temperatur von 1000°C.

Die in Tabelle 2 aufgeführten Werte sind kurz vor Ende der Heizphase ermittelt. Die Temperaturdifferenz ΔT ist immer kleiner als 6°C.

**Tabelle 2**

| s | b | T₁ | T₂ | ΔT | H | Ph | q |
|---|---|---|---|---|---|---|---|
| [mm] | [mm] | [°C] | [°C] | [°C] | [kW/m²K] | [kW] | [kW/m²] |
| | | | | | | | |
| 20 | 180 | 230,6 | 225,3 | 5,3 | 128 | 55,5 | 99,5 |
| 30 | 185 | 230,4 | 225,6 | 4,8 | 198 | 82,7 | 153,0 |

H ist die Wärmeübergangszahl zwischen der festen Kanalwand und dem bewegten Heiz-oder Kühlmedium. Ph ist die Heizleistung und q steht für den Wärmefluss an der dem Formwerkzeughohlraum zugewandten Oberfläche 8 der Formwerkzeugschale 3. kW steht für Kilowatt und K für Kelvin.

Die für eine hinreichende Kühlleistung ermittelte Dimensionierung der Kanalabstände s, b aus Tabelle 1 genügen, wie anhand der Dimensionierung derselben Grössen aus Tabelle 2 entnommen werden kann, auch für eine hinreichende Beheizung der Formwerkzeugschale 3.

Die Temperaturverteilung auf der dem Formwerkzeughohlraum zugewandten Oberfläche 8 der Formwerkzeugschalen durch den Formwerkzeugquerschnitt gemäss Fig. 2 und 3 verläuft in der Regel sinus-förmig, wobei die Temperaturmaxima der Temperaturkurve auf der Oberfläche 8 direkt unterhalb der Kanäle und die Temperaturminima der Temperaturkurzve auf der Oberfläche 8 zwischen zwei Kanälen liegen und T₁ ein Temperaturminima und T₂ ein Temperaturmaxima ist.

Das vorliegende heiz- und kühlbare Formwerkzeug 15 ermöglicht die Herstellung von Faserverbundteilen 14 im RTM-Verfahren mit Thermoplastmatrizes in sehr kurzen Taktzeiten von rund 8 bis 12 min., insbesondere von 10 min. Da im Gegensatz zu Duroplastmatrizes mit wesentlich höheren Polymerisations- bzw. Aushärtungstemperaturen gearbeitet wird, muss zur Einhaltung niedriger Taktzeiten das Formwerkzeug 15 bzw. die Formmasse schnell aufgeheizt und nach Abschluss der Polymerisation bis zur Entformung innert kurzer Zeit stark abgekühlt werden, was mit dem erfindungsgemässen Formwerkzeug 15 und dank dem erfindungsgemässen Herstellungsverfahren erfolgreich gelingt.

Die Benützung derselben Kanäle zum sequentiellen Beheizen und Kühlen der Formwerkzeugschale erlaubt des weiteren eine optimale Temperaturführung mit kurzen Ansprechzeiten, schnelle Wechsel zwischen Heiz- und Kühlphasen, hohe Heiz- und Kühlleistung sowie eine ziemlich gleichmässige Temperaturverteilung an der dem Formwerkzeughohlraum zugewandten Seite der Formwerkzeugschale.

## Patentansprüche

1. Vorrichtung zur Herstellung von Faserverbundteilen (14) in einem RTM-Verfahren enthaltend ein Formwerkzeug (15) aus einem oberen Formwerkzeugteil (11) und einem unteren Formwerkzeugteil (12), wobei die Formwerkzeugteile (11, 12) derart zusammenwirken, dass zwischen dem oberen und unteren Formwerkzeugteil (11, 12) ein Formwerkzeughohlraum zur Aufnahme einer Formmasse gebildet wird, und das Formwerkzeug (15) Mittel zu dessen Beheizung enthält,
dadurch gekennzeichnet, dass die Formwerkzeugteile (11, 12) ein aussen liegendes Deckelement (2) und eine innen liegende Formwerkzeugschale (3, 3a) aus einem Metall oder einer Metalllegierung hoher thermischer Leitfähigkeit enthalten, wobei die Formwerkzeugschale (3, 3a) Kanäle (4, 4a) zur Zirkulation eines Heiz- und Kühlmediums enthält, und die Vorrichtung Mittel zur Einleitung eines Heiz- und Kühlmediums in die Kanäle enthält.

2. Vorrichtung nach Anspruch 1 , dadurch gekennzeichnet, dass die Formwerkzeugschale (3, 3) Kanäle zur sequentiellen Zirkulation eines Heiz- und Kühlmediums und Mittel zur sequentiellen Einleitung eines Heiz- und Kühlmediums in die Kanäle enthält.

3. Vorrichtung nach Anspruch 1 oder 2, dadurch gekennzeichnet, dass die Formwerkzeugschale (3, 3a) aus Kupfer oder einer Kupferlegierung, insbesondere aus einer Bronze, oder aus Aluminium oder einer Aluminiumlegierung besteht.

4. Vorrichtung nach einem der Ansprüche 1 bis 3, dadurch gekennzeichnet, dass die Formwerkzeugschale (3, 3a) ein Gussstück ist.

5. Vorrichtung nach einem der Ansprüche 1 bis 4, dadurch gekennzeichnet, dass die Kanäle (4, 4a) in die Formwerkzeugschale (3, 3a) eingelassene Bohrungen (4a) sind, oder die Kanäle (4, 4a) an der dem Deckelement (2) anliegenden Seite eingearbeitete, insbesondere eingefräste, und mit einer Zwischenplatte (7) überdeckte, nutenförmige und kanalartig ausgebildete Vertiefungen (4) sind.

6. Vorrichtung nach einem der Ansprüche 1 bis 5, dadurch gekennzeichnet, dass die Querschnittsform der Kanäle (4, 4a) rechtecks- oder kreisförmig ist, und die Kanalwände Wandanformungen, insbesondere in Kanallängsrichtung verlaufende Leisten oder Rippen aufweisen.

7. Vorrichtung nach einem der Ansprüche 1 bis 6, dadurch gekennzeichnet, dass das Deckelement (2) an seiner der Formwerkzeugschale (3, 3a) anliegenden Seite oder die Formwerkzeugschale (3, 3a) an seiner dem Deckelement (2) anliegenden Seite eine Mehrzahl von Anformungen (5) als Distanzhalter zwischen Deckelement (2) und Formwerkzeugschale (3, 3a) aufweist, wobei die Anformungen (5) vorteilhaft zwischen den Kanälen (4, 4a) der Formwerkzeugschale (3, 3a) anliegen oder angebracht sind und zwischen dem Deckelement (2) und der Formwerkzeugschale (3, 3a) durch die Anformungen (5) strukturierte Hohlräume (6) ausgebildet sind.

8. Vorrichtung nach einem der Ansprüche 1 bis 7, dadurch gekennzeichnet, dass das Deckelement (2) zur Erhöhung der Steifigkeit des Formwerkzeugteils aus einem Metall oder einer Metalllegierung, insbesondere aus Stahl oder einer Stahllegierung, oder aus Beton besteht.

9. Vorrichtung nach einem der Ansprüche 1 bis 8, dadurch gekennzeichnet, dass das Deckelement (2) ein Wärmedämmmaterial enthält oder im wesentlichen daraus besteht.

10. Verfahren zur Herstellung von Faserverbundteilen in RTM-Technik unter Verwendung einer Vorrichtung nach einem der Ansprüche 1 bis 9, wobei eine Thermoplast-Matrix, insbesondere eine Polyamid-12-Matrix, verarbeitet wird und das Formwerkzeug (15) mit einem Faserrohling (13) beschickt wird und das Formwerkzeug (15) geschlossen und beheizt wird und die Thermoplast-Matrix in das Formwerkzeug (15) injiziert wird und unter Druck und/oder Wärme auspolymerisiert und nach Abkühlung auf eine Entformungstemperatur das Faserverbundteil (14) entformt wird,
dadurch gekennzeichnet, dass zu Beginn, während oder spätestens bei Beenden des Schliessens des Formwerkzeuges (15) ein Medium zur Beheizung der Formwerkzeugschalen (3, 3a) in Kanäle (4, 4a) der Formwerkzeugschalen (3, 3a) eingeleitet und zur Zirkulation gebracht wird und die Formwerkzeugschalen (3, 3a) beheizt werden und die Thermoplast-Matrix bei Erreichen des Injiziertemperaturbereichs der Formwerkzeugschalen (3, 3a) in das Formwerkzeug (15) injiziert wird, und nach Abschluss des Injiziervorganges die Formwerkzeugschalen (3, 3a) weiter auf die Polymerisationstemperatur beheizt werden und die Kunststoff-Matrix auspolymerisiert und die Formmasse zu einem Faserverbundteil (14) verfestigt und vor oder nach Abschluss der Polymerisation ein Medium zum Kühlen der Formwerkzeugschalen (3, 3a) in Kanäle (4, 4a) in Zirkulation gebracht wird und die Formwerkzeugschalen (3, 3a) auf eine Entformungstemperatur gekühlt werden.

11. Verfahren zur Herstellung von Faserverbundteilen nach Anspruch 10, dadurch gekennzeichnet, dass nach Beschicken des Formwerkzeuges mit dem Faserrohling der Formwerkzeughohlraum mit einem Inertgas, insbesondere mit trockenem Stickstoff, gespült wird und vorhandenes Wasser oder Wasserdampf entfernt wird, wobei das in den Formwerkzeughohlraum eingebrachte Inertgas eine Temperatur von 150 - 500°C, insbesondere von 200 bis 300°C aufweist.

12. Verfahren zur Herstellung von Faserverbundteilen nach Anspruch 10 oder 11, dadurch gekennzeichnet, dass nach dem Schliessen des mit dem Faserrohling beschickten Formwerkzeuges, vorzugsweise nach dem Spülen des beschickten Formwerkzeuges mit einem Inertgas, der Formwerkzeughohlraum evakuiert und die Kunststoffmatrix unter Vakuum injiziert wird.

13. Verfahren zur Herstellung von Faserverbundteilen nach einem der Ansprüche 10 bis 12, dadurch gekennzeichnet, dass zur Beheizung und Kühlung der Formwerkzeugschalen (3, 3a) dieselben Kanäle (4, 4a) benutzt werden und zur Einleitung der Kühlung das Kühlmedium in die Kanäle (4, 4a) eingeleitet wird und das Heizmedium durch das Kühlmedium aus den Kanälen (4, 4a) verdrängt wird.

14. Verfahren zur Herstellung von Faserverbundteilen nach einem der Ansprüche 10 bis 13, dadurch gekennzeichnet, dass die Formwerkzeugschalen (3, 3a) eine Beschikkungstemperatur von weniger als 160°C, bevorzugt von 90 bis 150°C, insbesondere von 130 bis 150°C aufweisen.

15. Verfahren zur Herstellung von Faserverbundteilen nach einem der Ansprüche 10 bis 14, dadurch gekennzeichnet, dass die Formwerkzeugschalen (3, 3a) auf einen Injiziertemperaturbereich von 150 bis 190°C, insbesondere von 150 bis 180° erwärmt werden und nach Abschluss des Injizierens der Kunststoff-Matrix die Formwerkzeugschalen (3, 3a) auf eine Polymerisationstemperatur von 190 bis 260°C, bevorzugt von 200 bis 230°C erwärmt werden und die Polymerisation eingeleitet wird.

16. Verfahren zur Herstellung von Faserverbundteilen nach einem der Ansprüche 10 bis 15, dadurch gekennzeichnet, dass vor Abschluss der Polymerisation die Formwerkzeugschalen (3, 3a) auf eine unterste Polymerisationstemperatur, vorzugsweise auf 190°C abgekühlt werden und/oder nach Abschluss der Polymerisation die Formwerkzeugschalen (3, 3a) auf eine Temperatur von weniger als 160°C, bevorzugt zwischen 90 und 150°C, vorteilhaft zwischen 130 bis 150°C abgekühlt werden.

17. Verfahren zur Herstellung von Faserverbundteilen nach einem der Ansprüche 10 bis 16, dadurch gekennzeichnet, dass zur Beheizung der Formwerkzeugschalen (3, 3a) ein Inertgas, bevorzugt Stickstoff, mit einer mittleren Temperatur von 500 bis 1500°C, vorzugsweise von 800 bis 1200°C, vorteilhaft von 900 bis 1100°C in den Kanälen (4, 4a) in Zirkulation gebracht wird, und dass zur Kühlung der Formwerkzeugschalen (3, 3a) Wasser oder ein im wesentlichen wasserhaltiges Kühlmittel mit einer mittleren Temperatur von 0 bis 50°C, vorzugsweise von 0 bis 35°C, vorteilhaft von 10 bis 30°C, in den Kanälen (4, 4a) in Zirkulation gebracht wird.

18. Verfahren zur Herstellung von Faserverbundteilen nach einem der Ansprüche 10 bis 17, dadurch gekennzeichnet, dass die Formwerkzeugschalen (3, 3a) mit einer Erwärmungsrate von 0,15 bis 0,35°C/sec., bevorzugt von 0,20 bis 0,30°C/sec., und insbesondere von 0,25°C/sec. beheizt werden, und dass die Formwerkzeugschalen (3, 3a) mit einer Abkühlrate von 0,5 bis 2,5°C/sec., bevorzugt von 0,7 bis 1,8°C/sec., und insbesondere von 1,2 bis 1,3°C/sec. gekühlt werden.
